(19) Europäisches Patentamt / European Patent Office / Office européen des brevets

(11) **EP 1 979 276 B1**

(12) **FASCICULE DE BREVET EUROPEEN**

(45) Date de publication et mention
de la délivrance du brevet:
**08.01.2014  Bulletin 2014/02**

(21) Numéro de dépôt: **07704285.1**

(22) Date de dépôt: **01.02.2007**

(51) Int Cl.:
*C03B 5/24* *(2006.01)*          *G01K 11/12* *(2006.01)*

(86) Numéro de dépôt international:
**PCT/EP2007/050963**

(87) Numéro de publication internationale:
**WO 2007/088180 (09.08.2007 Gazette 2007/32)**

(54) **MESURE DE LA TEMPERATURE D'UN BAIN DE VERRE FONDU**

MESSUNG DER TEMPERATUR EINER GLASSCHMELZE

MEASURING THE TEMPERATURE OF A MOLTEN GLASS BATH

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **03.02.2006  FR 0650385**

(43) Date de publication de la demande:
**15.10.2008  Bulletin 2008/42**

(73) Titulaires:
  • **Commissariat à l'Énergie Atomique et aux Énergies Alternatives**
    **75015 Paris (FR)**
  • **Areva NC**
    **75009 Paris (FR)**

(72) Inventeurs:
  • **BRUN, Patrice**
    **F-30200 Saint-michel d'Euzet (FR)**
  • **LACOMBE, Jacques**
    **F-30131 Pujaut (FR)**
  • **PAPIN, Yann**
    **F-30290 Laudun (FR)**

(74) Mandataire: **Ahner, Philippe et al**
    **BREVALEX**
    **95 rue d'Amsterdam**
    **75378 Paris Cedex 8 (FR)**

(56) Documents cités:
    **AU-B2- 564 792        US-A- 3 057 175**
    **US-B1- 6 489 168**

**Description**

Le sujet de cette invention est la mesure de la température d'un bain de verre fondu ou d'une matière très visqueuse maintenu à haute température.

La mesure d'une telle température est nécessaire pour contrôler les processus de vitrification, mais elle est difficile puisque les températures atteintes par le verre fondu sont très élevées. La plupart des matériaux usuels de construction des capteurs fondent ou du moins perdent leur résistance. Une autre technique consiste à mesurer une température inférieure à la température effectivement atteinte par le verre en plaçant le capteur de température dans une canne refroidie par une circulation d'eau. Une gangue de verre solidifié se forme autour de la canne et la protège des échauffements excessifs et de la corrosion. Des fonctions de corrélation permettent de déduire la température du bain de verre fondu de la température effectivement mesurée. Cette technique de mesure par canne refroidie est éprouvée, mais imprécise puisqu'elle concerne un seul endroit du bain de verre, dont la température peut être hétérogène, et qu'elle est très sensible à l'état physique du bain et notamment aux mouvements de convection naturelle ou forcée dont il est le siège ainsi qu'à l'épaisseur de verre figé, susceptible de varier aussi, qui la couvre.

Ces insuffisances ont conduit à développer, d'après la présente invention, un procédé de mesure où la mesure directe de la température réelle, ou d'une température diminuée est remplacée, par la mesure d'un autre paramètre qu'une fonction permet de corréler avec la température pour accomplir une mesure indirecte de celle-ci. Une propriété commune aux paramètres envisagés ici, est qu'ils ne sont pas associés au bain fondu et ne nécessitent donc pas de placer de capteur dans le creuset contenant le bain fondu, mais hors de lui, où il fonctionne dans de meilleures conditions dans un milieu plus frais.

L'invention repose sur un emploi particulier d'un agitateur mécanique du bain de verre en fusion. Les agitateurs connus sont de formes variées et comprennent généralement un corps tournant muni de pales ou de moyens semblables pour déplacer le verre autour d'elles et produire un brassage. L'agitateur est maintenu à une température modérée par un circuit d'eau de refroidissement qui le parcourt, dans des conduits concentriques ou autrement.

Les paramètres utiles à la mesure et qu'on corrèle à la température des bains de fusion sont tirés du fonctionnement de cet agitateur. Il est à remarquer que le refroidissement crée encore une gangue de verre figé autour de l'agitateur, mais cette circonstance qui était défavorable dans le cas d'une canne de mesure de la température, ne l'est plus autant ici grâce à l'agitation qui stabilise l'épaisseur du verre fixé autour des pales et de l'arbre central de l'agitateur, et qui régularise l'état du bain autour des pales ; de plus, l'agitateur étant en contact direct avec la plus grande partie du bain fondu, il reçoit un échauffement qui exprime beaucoup mieux la température globale ou moyenne du bain en fusion.

Dans une réalisation particulière du procédé de l'invention, le paramètre mesuré et qui exprime la température du bain fondu est la puissance calorifique extraite du fluide de refroidissement parcourant l'agitateur. Dans une autre réalisation particulière, la grandeur mesurée est le couple moteur de l'agitateur, à vitesse stable. Le document US 6,489,168 décrit un procédé de mesure de viscosité d'un bain en corrélant une grandeur mesurée à ladite viscosité par une fonction établie auparavant. La grandeur mesurée est tirée d'un agitateur mécanique dans le bain pour le brasser.

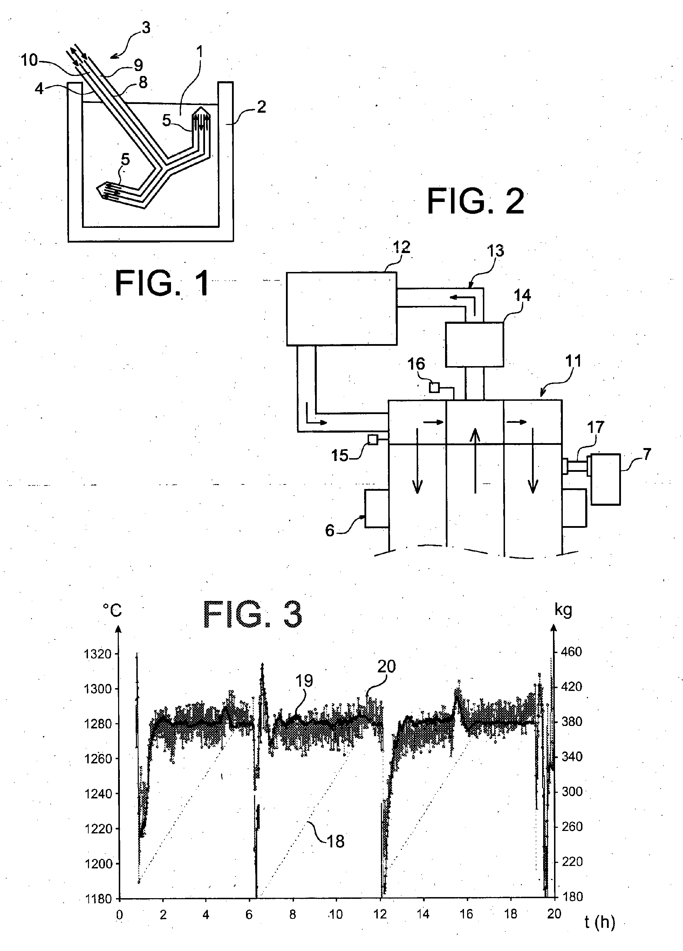

L'invention sera maintenant décrite à l'aide de la figure 1, qui représente un bain fondu pourvu d'un agitateur, de la figure 2 qui représente le circuit de refroidissement et de la figure 3 qui illustre un exemple. Le bain porte la référence 1 et se trouve dans un creuset 2 auquel est joint un moyen de chauffage non représenté et pouvant consister, comme il est fréquent, en une spire inductrice disposée autour du creuset 2. On ne représente pas non plus les moyens usuels d'alimentation du creuset ni la vanne inférieure de coulée, bien connus dans l'art antérieur et étrangers à l'invention. Le creuset 2 contient toutefois un agitateur 3, ici en forme d'ancre et comprenant un arbre 4 plongeur et une paire de pales 5 opposée. L'arbre 4 est soutenu par des paliers 6 et entraîné en rotation par un moteur 7 muni d'un réducteur et d'un variateur de couple. L'agitateur 3 est creux et comprend un tube 8 central divisant l'intérieur entre un canal périphérique 9 d'injection d'eau de refroidissement et d'un canal central 10, concentrique au précédent, où l'eau injectée est reprise. Le tube 8 bifurque dans chacune des pales et est ouvert à ses extrémités pour permettre à l'eau de passer du canal périphérique 9 au canal central 10. Le circuit comprend encore une boîte à eau 11 placée au sommet de l'arbre 4, une pompe 12, une tuyauterie 13 reliant la pompe 12 à la boîte à eau 11 et comprenant un conduit d'aspiration, un conduit de refoulement, et une installation de réfrigération 14 sur la tuyauterie 13.

L'invention serait opérante avec d'autres agitateurs, notamment en hélice ou en serpentin. Il convient cependant que le refroidissement soit régulier et suffisant sur toute la surface de l'agitateur. De plus, les pales 5 ont une étendue suffisante pour réaliser un brassage global du bain fondu. Il est à noter toutefois que l'invention fonctionne bien si elle est mise en oeuvre sur un agitateur de petite taille d'un bain fondu pourvu d'autres agitateurs sur lesquels aucune mesure n'est entreprise mais qui partagent la fonction de brassage avec le premier.

Dans une réalisation particulière de l'invention, on mesure la puissance calorifique extraite par l'agitateur 3, qu'on peut déduire du débit de la pompe 12 et de mesures de la température de l'eau de refroidissement menées par des capteurs 15 et 16 à l'entrée du canal périphérique 9 et à la sortie du canal central 10. La formule appliquée pour mesurer la température est :

$$T_1 = C_1 \cdot \ln\left(\frac{C_2}{P}\right),$$ où $T_1$ est la température recherchée, $C_1$ et $C_2$ sont des constantes obtenues empiriquement par des essais antérieurs et P est la puissance calorifique. Les constantes dépendent seulement, en pratique, de la vitesse de rotation de l'agitateur et du volume du bain fondu pour une installation et une composition du bain fondu déterminées.

Dans une autre réalisation de l'invention, c'est le couple moteur de l'agitateur qui est mesuré pour accomplir la mesure indirecte de la température du bain fondu. La mesure est encore plus facile et peut s'effectuer par un couplemètre 17 placé sur la transmission contre le moteur 7 et l'arbre 3. La formule de corrélation est alors du genre $$T_2 = C_3 \cdot \ln\left(\frac{C_4}{C}\right),$$ où $T_2$ est la température du bain fondu (qui devrait être la même que $T_1$), $C_3$ et $C_4$ sont d'autres constantes déterminées par des essais antérieurs et C est le couple mesuré. Ici encore les constantes $C_3$ et $C_4$ sont invariables pour l'installation déterminée, et dépendent seulement de la vitesse de rotation et du volume de matière fondue.

Ces deux procédés de mesure peuvent être utilisés séparément ou ensemble.

Un exemple est donné à la figure 3, en appliquant la première formule, où les coefficients étaient $C_1 = -108,7$ et $C_2 = 0,0091$ pour la puissance P de l'agitateur exprimé en watts et la température T1 exprimée en degrés Celsius. Le processus comprenait une série de cycles où du verre de composition constante était versé peu à peu dans le creuset, puis retiré rapidement après la fusion, selon l'indication de la courbe 18 donnant le poids de verre dans le creuset (en kilogrammes sur l'échelle des ordonnées de droite) en fonction du temps (en heures sur l'échelle des abscisses).Les paramètres $C_1$ et $C_2$ avaient été estimés à un cycle précédent.

On donne les courbes de température réelle 19, mesurée par un thermocouple, du bain de fusion, et de la température 20 estimée d'après l'invention (sur l'échelle des ordonnées de gauche). Ces courbes coïncident bien, la courbe 20 présentant seulement des oscillations prenant l'aspect d'une enveloppe de 20°C de largeur environ pour les états quasi stables des cycles, qui contient la courbe 19.

## Revendications

1. Procédé de mesure de température d'un bain (1) de verre fondu, en corrélant une grandeur mesurée à ladite température par une fonction établie auparavant, **caractérisé en ce que** la grandeur mesurée est tirée d'un agitateur (3) mécanique mobile dans le bain de verre pour le brasser.

2. Procédé de mesure de température selon la revendication 1, **caractérisé en ce que** la grandeur mesurée est la puissance calorifique extraite d'un fluide de refroidissement parcourant l'agitateur et calculée, d'après le débit du fluide et le réchauffement du fluide de l'entrée à la sortie de l'agitateur.

3. Procédé de mesure de température selon la revendication 2, **caractérisé en ce que** la fonction est $$T_1 = C_1 \cdot \ln\left(\frac{C_2}{P}\right),$$ où $T_1$ est la température, $C_1$ et $C_2$ des constantes et P la puissance calorifique.

4. Procédé de mesure de température selon la revendication 1, l'agitateur étant tournant, **caractérisé en ce que** la grandeur mesurée est le couple moteur de l'agitateur à vitesse stable.

5. Procédé de mesure de température selon la revendication 4, **caractérisé en ce que** la fonction est $$T_2 = C_3 \cdot \ln\left(\frac{C_4}{C}\right),$$ où $T_2$ est la température, $C_3$ et $C_4$ des constantes et C le couple.

## Patentansprüche

1. Verfahren zum Messen der Temperatur einer Glasschmelze (1), dadurch, dass man mittels einer zuvor ermittelten Funktion eine gemessene Größe mit dieser Temperatur korreliert, **dadurch gekennzeichnet, dass** die gemessene Größe von einem mechanischen Rührwerk (3) gezogen wird, das sich in der Schmelze bewegt, um sie zu mischen.

2. Verfahren zum Messen der Temperatur nach Anspruch 1, **dadurch gekennzeichnet, dass** die gemessene Größe die Wärmeleistung ist, die von einem das Rührwerk durchströmenden Kühlfluid entzogen wird und die gemäß der Fluiddurchflussmenge und der Erwärmung des Fluids vom Eintritt bis zum Austritt aus dem Rührwerk berechnet wird.

3. Verfahren zum Messen der Temperatur nach Anspruch 2, **dadurch gekennzeichnet, dass** die Funktion ist:

$$T_1 = C_1 \cdot \ln\left(\frac{C_2}{P}\right)$$

wobei $T_1$ die Temperatur ist, $C_1$ und $C_2$ Konstanten sind und P die Wärmeleistung ist.

4. Verfahren zum Messen der Temperatur nach Anspruch 1, wobei es sich um ein drehendes Rührwerk handelt, **dadurch gekennzeichnet, dass** die gemessene Größe das Motordrehmoment des Rührwerks bei gleichbleibender Geschwindigkeit ist.

5. Verfahren zum Messen der Temperatur nach Anspruch 4, **dadurch gekennzeichnet, dass** die Funktion ist:

$$T_2 = C_3 \cdot \ln\left(\frac{C_4}{C}\right)$$

wobei $T_2$ die Temperatur ist, $C_3$ und $C_4$ Konstanten sind und C das Drehmoment ist.

**Claims**

1. A method for measuring the temperature of a molten glass bath (1), by correlating a quantity measured at said temperature with a function established beforehand, **characterized in that** the measured quantity is drawn from a mobile mechanical stirrer (3) in the molten bath for mixing it.

2. The temperature measurement method according to claim 1, **characterized in that** the measured quantity is the heating power extracted from a coolant fluid flowing through the stirrer and calculated from the flow rate of the fluid and from the heating-up of the fluid from the inlet to the outlet of the stirrer.

3. The temperature measurement method according to claim 2, **characterized in that** the function is

$$T_1 = C_1 \ln\left(\frac{C_2}{P}\right) ,$$ wherein $T_1$ is the temperature, $C_1$ and $C_2$ are constants and P is the heating power.

4. The temperature measurement method according to claim 1, the stirrer being a rotating stirrer, **characterized in that** the measured quantity is the motor torque of the stirrer at a stable velocity.

5. The temperature measurement method according to claim 4, **characterized in that** the function is

$$T_2 = C_3 \ln\left(\frac{C_4}{C}\right) ,$$ wherein $T_2$ is the temperature, $C_1$ and $C_2$ are constants and C is the torque.

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6489168 B